# EUROPÄISCHE PATENTSCHRIFT

(11) **EP 2 614 977 B1**
(45) Veröffentlichungstag und Bekanntmachung des Hinweises auf die Patenterteilung: **20.01.2016**
(21) Anmeldenummer: 12184852.7
(22) Anmeldetag: 18.09.2012
(51) Int. Cl.: B60J 10/04, B60J 10/00

(54) **Dichtung zur Aufnahme einer festen und einer beweglichen KFZ-Scheibe**
Sealing for receiving a fixed and a movable vehicle window pane
Joint d'étanchéité pour recevoir une vitre fixe et une vitre mobile de véhicule

(30) Priorität: 13.01.2012 EP 12000200
(43) Veröffentlichungstag der Anmeldung: 17.07.2013
(73) Patentinhaber: Magna Sealing and Glass Systems, 52200 Hûmes Jorquenay (FR)
(72) Erfinder: Nemard, Thierry, 52 000 LUZY sur MARNE (FR); Febvay, Patrick, 52 200 LANGRES (FR)
(74) Vertreter: Rausch, Gabriele

(56) Entgegenhaltungen:
- EP-A1- 0 792 766
- FR-B1- 2 858 950
- JP-A- 2007 276 686
- US-A1- 2003 168 882
- US-A1- 2006 156 632

## Beschreibung

Die Erfindung betrifft eine Scheibenaufnahme der Art von Anspruch 1.

Scheibenaufnahmen der beschriebenen Art finden bei Kraftfahrzeugen Verwendung. So dient z.B. die fest an der Fahrzeugtür angebrachte vordere Dreieckschelbe der Aufnahme einer Scheibenführung nebst Dichtung, in welcher eine vertikal bewegbare Seitenscheibe geführt und gedichtet ist. Die feste Scheibe ist fest mit einem Element der Scheibenführung verbunden, trägt dieses Element über die Länge ihrer Kante. Die Aufnahme hierfür kann als ein gummiartiges Element ausgebildet sein bzw. in Form eines duro- oder thermoplastischen Werkstoffes.

Aus der EP 0 333 993 A2 ist eine Verbindung einer festen Scheibe mit einer daran angebrachten Halteschiene beschrieben. Die Halteschiene ist im Wesentlichen H-profilförmig ausgebildet, wobei die feste Scheibe in einem Spaltbereich des Profils mittels eines eingespritzten Werkstoffes mit diesem Profil befestigt ist. Der gegenüberliegende zweite Spaltbereich des H-förmigen Profils dient der Aufnahme einer Dichtung für die Kante der im Türkörper beweglich gelagerten Scheibe.

Bei der Lösung gemäß der WO 2011 010043 A1 ist die Halteschiene als teilbares H-Profil ausgebildet. Die Verbindung der beiden Profilteile erfolgt durch Verrasten, wozu ein Profilteil einen sich in Erstreckungsrichtung und senkrecht zur Scheibenebene verlaufenden Steg und das zweite Profiltell eine diesen Steg aufnehmendes U-Profil aufweist. Die Dichtungen zur Dichtung, Führung der bewegbaren Scheibe sowie zur Aufnahme der festen Scheibe werden bei geteiltem Profil zwischen die Profiltelle gelegt und dann beim Verrasten der Profilteile zwischen diesen fixiert. Das Fixieren der festen Scheibe erfolgt ebenfalls durch die Klemmung beim Verrasten der Profilteile.

Die FR 2 858 950 B1 zeigt die Halteschiene einer festen Scheibe, bestehend aus zwei miteinander verrastbaren Profiteilen, welche zusammen ebenfalls ein H-förmiges Profil ergeben. Die Scheibenaufnahme für die feste Scheibe und das Dichtprofil für die Kante der bewegbaren Scheibe werden vor dem Verrasten der Teile eingelegt. Insbesondere Ist vorgesehen, dass das die feste Scheibe aufnehmende Dichtelement aus geeignetem Werkstoff in dem innen liegenden Profilteil angespritzt Ist.

Die gattungsgemäße US2003/0168882 beschreibt einen Gegenstand, bei dem ein Tragteil eine Scheibenanbindung für eine feste Schiene aufweist und dem Tragteil eine Abdeckung zugeordnet ist, welches mit dem Tragteil eine Nut als Aufnahme für ein Dichtungsprofil für eine bewegliche Scheibe liefert. Die Abdeckung ist in einer Darstellung mit einem Hakenelement direkt mit dem Tragteil verbunden. In einer zweiten Darstellung der D1 ist die Abdeckung L-förmig gestaltet und ein Schenkel taucht in einen Hohlraum der Scheibenanbindung ein.

Aufgabe der vorliegenden Erfindung Ist es daher, eine Scheibenaufnahme der beschriebenen Art in verbesserter Ausführung vorzuschlagen, insbesondere mit Blick auf den Aufwand bei Bauteilgestaltung und Montage.

Diese Aufgabe wird gelöst durch die Merkmale von Anspruch 1. Weiterbildungen ergeben sich aus den Unteransprüchen.

Gemäß der Erfindung ist eine an einer festen Scheibe angebrachte Scheibenaufnahme vorgesehen, welche der Führung einer weiteren beweglichen Scheibe dient. Diese Scheibenaufnahme setzt sich aus den folgenden Merkmalen zusammen:
- einem als Schiene ausgebildeten Trägerelement,
- einer Scheibenanbindung, vermittels der die feste Scheibe mit dem Trägerelement verbunden ist,
- einem die Kante einer beweglichen Scheibe aufnehmenden Dichtprofil,
- wobei das Dichtprofil In eine durch Trägerelement und einer Abdeckung gebildeten Nut eingelegt ist,
- wobei die Abdeckung über Verbindungselemente mit der Schelbenanbindung verbunden Ist,
- wobei das Tragelement in Form eines T mit unterschiedlich langen Schenkeln profiliert Ist,
- wobei die der Befestigung der Abdeckung dienenden Verbindungselemente als in die Scheibenanbindung ragende Vorsprünge der Abdeckung ausgebildet sind,
- wobei korrespondierend zu den Vorsprüngen der Abdeckung in der Scheibenanbindung die Vorsprünge aufnehmende Vertiefungen angeformt sind,
- wobei die Vorsprünge hakenförmige Elemente aufweisen, die in das Material der Scheibenanbindung eingreifen und so eine feste, unlösbare Verbindung ergeben.

Weiterbildungen ergeben sich durch eine:
- Scheibenaufnahme, bei welcher die Scheibenanbindung der festen Scheibe als eine das Tragelement wenigstens zum Teil umgebende Umspritzung ausgebildet ist, welche die feste Scheibe an einer Kante hält.
- Scheibenaufnahme, bei welcher die Umspritzung das Tragelement an der zum Fahrzeuginnenraum gerichteten Seite umgibt.

Gemäß der Erfindung erfolgt die Verbindung von Abdeckelement und Trägerelement über eine Befestigung des Abdeckelementes an der Scheibenanbindung. Das Abdeckelement weist als Erhebungen ausgebildete Verbindungselemente auf, welche in korrespondierend dazu ausgebildete Vertiefungen in der Scheibenanbindung eingreifen. Erfindungsgemäß weisen die Verbindungselemente Hakenelemente aufweisen, die in das Material der Scheibenanbindung eingreifen und so eine feste, unlösbare Verbindung ergeben. Auch ist es zusätzlich möglich die die Verbindungselemente darstellenden Erhebungen in entsprechende Vertiefungen einzukleben oder einzuschweißen.

Die die Verbindungselemente darstellenden Erhebungen an der Innenseite der Abdeckung sind gemäß einer Ausführungsform der Erfindung als ein Unterbrechungen aufweisender Steg ausgebildet. Die Vertiefung innerhalb der Scheibenanbindung ist als eine durchgehend oder abschnittsweise ausgeführte Nut ausgebildet. Auch ist es möglich, die Verbindungselemente als Stifte auszubilden, welche in einer oder mehreren Reihen entlang der schienenförmigen Abdeckung angeordnet sind.

Die Scheibenanbindung kann als eine Kunststoffumspritzung des Trägerelementes ausgebildet sein. Das Trägerelement wird vorzugsweise an der zum Fahrzeuginnenraum gerichteten Seite flächig umspritzt, so dass die Scheibenanbindung nahtlos die innere Verkleidung der Scheibenaufnahme bildet. Das Material und insbesondere dessen Farbe werden entsprechend dem gewünschten Design gewählt. Des Weiteren erfolgt die Erläuterung von Ausführungsbeispielen der Erfindung an Hand der Zeichnungen.

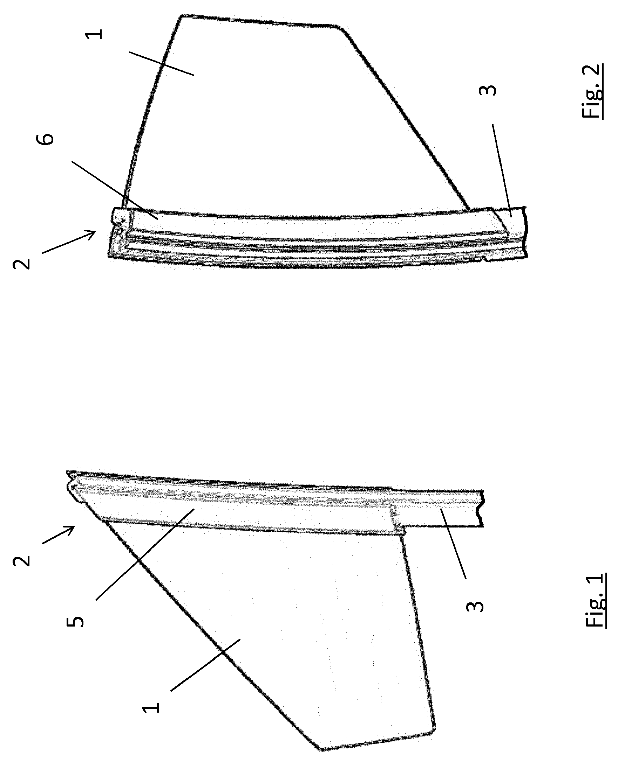

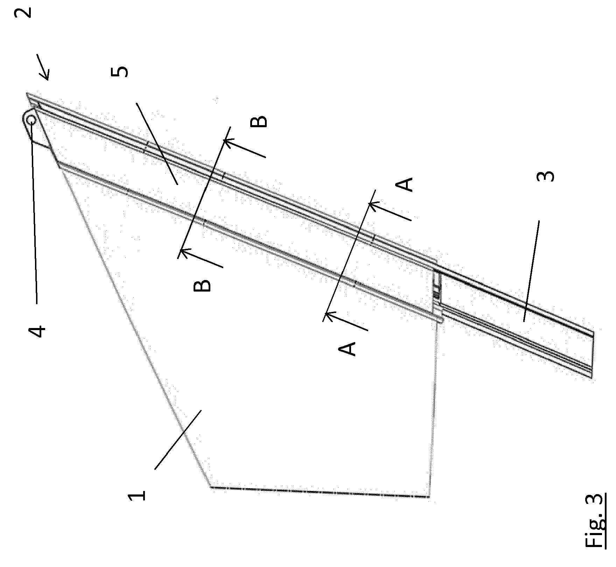

Die Figuren 1 und 2 zeigen eine feste Scheibe (Dreieckscheibe) 1 mit einer daran angebrachten Scheibenaufnahme in Form einer Führungs- bzw. Halteschiene 2. Figur 1 zeigt die Anordnung von Halteschiene 2 und fester Scheibe 1 von der Außenseite des Fahrzeuges - Figur 2 die besagte Anordnung von der Innenseite des Fahrzeuges, dessen Innenraum her. Die Halteschiene 2 ist mehrteilig aufgebaut und besteht aus einem sowohl von außen als auch innen nicht sichtbaren Trägerteil 3 in Form einer Schiene, welche unten in einen nicht dargestellten Tür- oder Karosseriekörper eintaucht und dort befestigt sein kann. Am oberen Ende weist das Trägerteil 3 eine Befestigungsöffnung 4 auf, über welche die Halteschiene 2 an der Karosserie bzw. einem die Fensteranordnung umgebenden Rahmen montiert wird. Diese Befestigungsöffnung 4 ist insbesondere in Figur 3 dargestellt.

Zur Fahrzeugaußenseite hin ist das als Metallschiene ausgebildete Trägerteil 3 mit einer Abdeckung 5, einem Abdeckteil versehen (Figur 1, 3). Fahrzeuginnenseitig ist die Halteschiene 2 als eine Kunststoffumspritzung ausgebildet, welche die Scheibenanbindung 6 für die feste Scheibe 1, die Dreieckscheibe, bildet und diese entlang einer Kante umfasst (Figur 2).

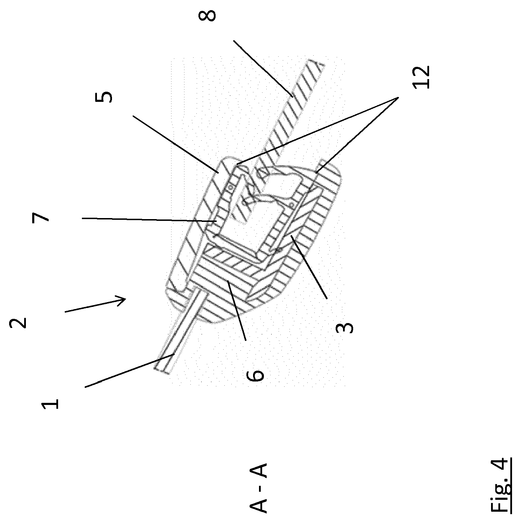

Figur 4 zeigt den Schnitt A-A durch die Halteschiene 1 wie in der Figur 3 angegeben. Das Trägerteil 3 ist auf der zur Fahrzeuginnenseite weisenden Fläche mit einem Kunststoff umspritzt. Das Trägerteil 3 ist als ein Winkelprofil ausgeführt und weist unterschiedlich lange Schenkel auf. Insgesamt ist das Trägerteil 3 so in Form eines asymmetrischen T (mit unterschiedlich langen Schenkeln) profiliert. Die feste Scheibe 1 ist mit einer Kante in die die Scheibenanbindung 6 bildende Umspritzung eingefasst. Von der Fahrzeugaußenseite her ist eine Abdeckung 5 angesetzt, welche als eine flache Leiste ausgebildet ist.

In die durch die Abdeckung 5 und dem langen Schenkel des Trägerteils 3 gebildete Nut ist ein Lamellen aufweisendes Dichtprofil 7 eingesetzt, welches der Führung und Dichtung einer entlang der Halteschiene 2 bewegbaren Scheibe 8 dient. In den Figuren 4 - 6 sind diese Lamellen dargestellt, nicht jedoch deren durch die Dicke der bewegbaren Scheibe 8 erzeugte Deformation.

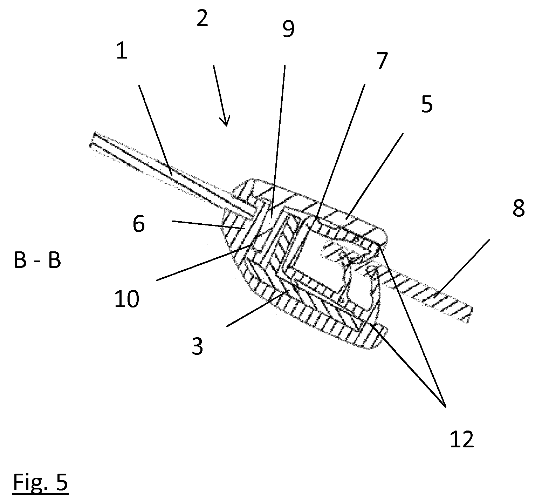

Wie in Figur 5 gezeigt ist die Abdeckung 5 mittels mehrerer, abschnittsweise über die Länge der Abdeckung 5 verteilter Verbindungselemente 9, welche als stift- oder rippenartig gestaltete Vorsprünge ausgebildet sind, direkt an dem umspritzten Material der Scheibenanbindung 6 befestigt. Die Figur 5 zeigt hierbei den Schnitt B-B, wie dieser in der Figur 3 angegeben ist. Die der Befestigung der Abdeckung 5 an der Scheibenanbindung 6 dienenden Vorsprünge 9 können in einer Ausführung der Erfindung direkt in das während des Umspritzvorganges erweichte Material eingelassen sein.

Auch kann gemäß einer weiteren Erfindungsausführung vorgesehen sein, dass die die Scheibenanbindung 6 bildende Umspritzung mit Vertiefungen 10 geformt wird, welche dann beim Ansetzen der Abdeckung 5 deren Vorsprünge 9 aufnehmen. Zur Erzeugung der Vertiefungen 10 in der Scheibenaufnahme 6 werden während des Umspritzvorganges geeignete Formen, Schieber verwendet. In den Vertiefungen 10 können die Vorsprünge 9 eingeklebt bzw. eingeschweißt werden.

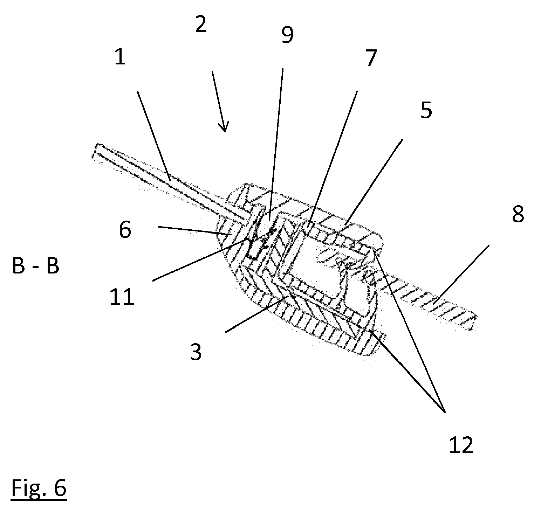

Die Figur 6 zeigt eine weitere Variante der Befestigung der Abdeckung 5 an der Scheibenanbindung 6. Hier sind hakenförmige Elemente 11 an den Vorsprüngen 9 angeformt, welche auf Grund von Gestaltung und Orientierung nach Art von Widerhaken mit dem Material der Scheibenaufnahme 6 zusammenwirken. So ergibt sich nach Ansetzen der Abdeckung 5 eine unlösbare Verbindung zwischen Scheibenanbindung 6 und Abdeckung 5.

Die erfindungsgemäße Gestaltung der Halteschiene 2 erlaubt eine einfache Montage. Mittels der Umspritzung 6 wird die feste Scheibe 1 an dem Trägerteil 3 befestigt. Das Dichtprofil 7 wird der festen Scheibe gegenüberliegend an dem Trägerteil 3 angelegt und durch Ansetzen der Abdeckung 5 in der sich so ergebenden Nut fixiert. Wie in den Figuren 4 - 6 dargestellt ist die Umspritzung 6 an der Kante des Trägerteils 3 an der zum Fahrzeuginnenraum weisenden Seite etwas umgreifend ausgeführt - eine derartige Umgreifung 12 weist auch die angesetzte Abdeckung 5 auf - hier in Form einer Abkantung. Nach dem Befestigen der Abdeckung 5 an der Umspritzung 6 liegt das Dichtprofil somit sicher in der durch Trägerteil 3 und Abdeckung 5 gebildeten Nut.

### Bezugszeichen

- 1: feste Scheibe
- 2: Halteschiene
- 3: Trägerteil, Schiene
- 4: Befestigungsöffnung
- 5: Abdeckung
- 6: Scheibenanbindung, Umspritzung (Trägerteil 3)
- 7: Dichtprofil
- 8: bewegbare Scheibe
- 9: Verbindungselement, Vorsprung, Stift
- 10: Vertiefung
- 11: Hakenelement
- 12: Umgreifung (Umspritzung, Abdeckung 5)

## Patentansprüche

1. Scheibenaufnahme für ein Kraftfahrzeug, wobei die Scheibenaufnahme an einer festen Scheibe angebracht ist und der Führung einer weiteren beweglichen Scheibe dient, bestehend aus
- einem als Schiene ausgebildeten Trägerelement (3),
- einer Scheibenanbindung (6), vermittels der die feste Scheibe (1) mit dem Trägerelement (3) verbunden ist,
- einem die Kante einer beweglichen Scheibe (8) aufnehmenden Dichtprofil (7),
- wobei das Dichtprofil (7) in eine durch Trägerelement (3) und einer Abdeckung (5) gebildeten Nut eingelegt ist,
- wobei die Abdeckung (5) über Verbindungselemente (9) mit der Scheibenanbindung (6) verbunden Ist
**dadurch gekennzeichnet,**
**dass** das Trägerelement (3) in Form eines T mit unterschiedlich langen Schenkeln profiliert ist,
**dass** die der Befestigung der Abdeckung (5) dienenden Verbindungselemente (9) als in die Scheibenanbindung (6) ragende Vorsprünge der Abdeckung (5) ausgebildet sind, wobei korrespondierend zu den Vorsprüngen (9) der Abdeckung (5) in der Scheibenanbindung (6) die Vorsprünge (9) aufnehmende Vertiefungen (10) angeformt sind, und
**dass** die Vorsprünge (9) hakenförmige Elemente (11) aufweisen, die in das Material der Scheibenanbindung (6) eingreifen und so eine feste, unlösbare Verbindung ergeben.

2. Schelbenaufnafme nach Anspruch 1,
bei welcher die Scheibenanbindung (6) der festen Scheibe (1) als eine das Trägerelement (3) wenigstens zum Teil umgebende Umspritzung ausgebildet ist, welche die feste Scheibe (1) an einer Kante hält.

3. Scheibenaufnahme nach Anspruch 2,
bel welcher die Umspritzung (6) das Trägerelement (3) an der zum Fahrzeuginnenraum gerichteten Seite umgibt.

## Claims

1. Window pane holder for a motor vehicle, wherein the window pane holder is mounted on a fixed window pane and serves to guide a further, movable window pane, comprising
- a carrier element (3) formed as a rail,
- a window pane binding (6) by means of which the fixed window pane (1) is connected to the carrier element (3),
- a sealing profile (7) receiving the edge of a movable window pane (8),
- wherein the sealing profile (7) is placed in a groove formed by the carrier element (3) and a covering (5), and
- wherein the covering (5) is connected to the window pane binding (6) via connection elements (9),
**characterized in that** the carrier element (3) is profiled in the form of a T with legs of different lengths, **in that** the connection elements (9) serving to fasten the covering (5) are formed as projections on the covering (5) that protrude into the window pane binding (6), wherein, in a corresponding manner to the projections (9) on the covering (5), depressions (10) which receive the projections (9) are integrally formed in the window pane binding (6), and **in that** the projections (9) have hook-shaped elements (11) which engage in the material of the window pane binding (6) and thus produce a fixed, non-releaseable connection.

2. Window pane holder according to Claim 1, in which the window pane binding (6) of the fixed window pane (1) is formed as an injection-moulded encapsulation which at least partly surrounds the carrier element (3) and which holds the fixed window pane (1) at an edge.

3. Window pane holder according to Claim 2, in which the injection-moulded encapsulation (6) surrounds the carrier element (3) on the side directed towards the vehicle interior.

## Revendications

1. Logement de vitre pour un véhicule automobile, le logement de vitre étant monté sur une vitre fixe et servant au guidage d'une autre vitre mobile, constitué
- d'un élément de support (3) réalisé sous forme de rail,
- d'un raccordement de vitre (6) au moyen duquel la vitre fixe (1) est connectée à l'élément de support (3),
- d'un profilé d'étanchéité (7) recevant le bord d'une vitre mobile (8),
- le profilé d'étanchéité (7) étant introduit dans une rainure formée par l'élément de support (3) et un recouvrement (5),
- le recouvrement (5) étant connecté au raccordement de vitre (6) par le biais d'éléments de connexion (9),
**caractérisé en ce que**
l'élément de support (3) est profilé sous la forme d'un T ayant des branches de longueurs différentes,
les éléments de connexion (9) servant à la fixation du recouvrement (5) sont réalisés sous forme de saillies du recouvrement (5) pénétrant dans le raccordement de vitre (6), des renfoncements (10) recevant les saillies (9) étant façonnés de manière correspondant aux saillies (9) du recouvrement (5) dans le raccordement de vitre (6), et
les saillies (9) présentent des éléments en forme de crochet (11) qui s'engagent dans le matériau du raccordement de vitre (6) et produisent ainsi une connexion fixe non desserrable.

2. Logement de vitre selon la revendication 1, dans lequel le raccordement de vitre (6) de la vitre fixe (1) est réalisé sous forme de surmoulage entourant au moins en partie l'élément de support (3), lequel surmoulage retient la vitre fixe (1) au niveau d'un bord.

3. Logement de vitre selon la revendication 2, dans lequel le surmoulage (6) entoure l'élément de support (3) au niveau du côté orienté vers l'habitacle du véhicule.
